(19) Europäisches Patentamt
European Patent Office
Office européen des brevets

(11) **EP 3 126 805 B1**

(12) **EUROPÄISCHE PATENTSCHRIFT**

(45) Veröffentlichungstag und Bekanntmachung des Hinweises auf die Patenterteilung:
**18.03.2020  Patentblatt 2020/12**

(21) Anmeldenummer: **15712339.9**

(22) Anmeldetag: **24.03.2015**

(51) Int Cl.:
*G01L 13/02* (2006.01)    *G01L 19/06* (2006.01)
*G01L 19/14* (2006.01)

(86) Internationale Anmeldenummer:
**PCT/EP2015/056186**

(87) Internationale Veröffentlichungsnummer:
**WO 2015/150154 (08.10.2015 Gazette 2015/40)**

(54) **DIFFERENZDRUCKSENSOR**

DIFFERENTIAL PRESSURE SENSOR

CAPTEUR DE PRESSION DIFFÉRENTIELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2014  DE 102014104831**

(43) Veröffentlichungstag der Anmeldung:
**08.02.2017  Patentblatt 2017/06**

(73) Patentinhaber: **Endress+Hauser SE+Co. KG
79689 Maulburg (DE)**

(72) Erfinder:
• **THAM, Anh Tuan
14089 Berlin (DE)**
• **KLÖFER, Peter
79585 Steinen (DE)**
• **TEIPEN, Rafael
10407 Berlin (DE)**
• **LEMKE, Benjamin
12051 Berlin (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
EP-A1- 0 065 845      WO-A1-88/00335
WO-A1-2011/076477      DE-A1- 2 052 515
US-A- 5 134 887

**Beschreibung**

Die vorliegende Erfindung betrifft einen Differenzdrucksensor, insbesondere einen Differenzdrucksensor mit einem Schutz gegen statische Überlasten.

Differenzdrucksensoren sind gewöhnlich darauf optimiert geringe Druckdifferenzen $p_1$-$p_2$ bei großen statischen Drucken $p_1$, $p_2$ zu messen. Hierbei ist es wichtig, die richtige Balance zwischen Empfindlichkeit und Überlastfestigkeit zu finden. So kann beispielsweise für den Messbereich der Druckdifferenz $|p_1$-$p_2|$ gelten $|p_1$-$p_2|/p_1 < 1\%$. Wenn in einer Prozessanlage einer der Drücke $p_1$, $p_2$ entfällt, wird der Differenzdrucksensor mit dem 100-fachen des Messbereichs belastet. Es sind Differenzdruckmessaufnehmer bekannt, die solchen Überlasten standhalten. Ein bewährter Schutz der empfindlichen Differenzdruckmesszellen beruht darauf, eine Überlastmembran zum Differenzdrucksensor hydraulisch parallel zu schalten, wobei die Differenzdruckmesszelle und die Überlastmembran über hydraulische Pfade mit den beiden Drücken $p_1$, $p_2$ zu beaufschlagen, wobei die Drücke durch Trennmembranen in die hydraulischen Pfade eingeleitet werden. Eine Überlastmembran weist eine hinreichend große hydraulische Kapazität auf, um im Falle einer einseitigen Überlast das Volumen einer Übertragungsflüssigkeit in einem hydraulischen Pfad so weit aufzunehmen, dass die Trennmembran dieses hydraulischen Pfads an einem Membranbett zur Anlage kommt, so dass ein weiterer Anstieg des auf den Differenzdrucksensor wirkenden Differenzdrucks zuverlässig verhindert ist. Beispiele für Differenzdruckmessaufnehmer mit Überlastmembranen sind in EP 1 299 701 B1, DE 10 2006 040 325 A1 und DE 10 2006 057 828 A1 offenbart.

Der Einsatz von Überlastmembranen führt jedoch zwingend zu größeren Volumenhüben der Übertragungsflüssigkeit und damit - bei gleicher Leistungsfähigkeit - zu größeren Trennmembranflächen, was größere Geräteabmessungen, und höhere Kosten zur Konsequenz hat. Außerdem wird die Messwerksdynamik durch die Überlastmembran und das größere Volumen der Übertragungsflüssigkeit negativ beeinflusst.

Es sind daher Bemühungen bekannt, den Überlastschutz für die Messmembran durch Membranbetten zu realisieren. Hierbei soll sich die Messmembran bei Überschreiten eines Grenzwerts für einen einseitigen Überdruck zumindest in dem Maße an dem Membranbett abstützen, dass die Berstspannung der Messmembran auch bei einem weiteren Druckanstieg nicht erreicht wird.

Dafür sind insbesondere asphärische Membranbetten geeignet, welche die Biegelinie der Messmembran bei dem Grenzwert für den Überdruck approximieren.

Die Patentschrift US 4 458 537 offenbart einen kapazitiven Differenzdrucksensor mit einem asphärischen Membranbett aus Glas, welches in eine Struktur koaxialer Ringe eingebracht ist, wobei die Höhen der Ringe eine Kontur bilden, welche der Biegelinie der Messmembran entspricht.

Die Offenlegungsschrift DE 10 2009 046 229 A1 offenbart einen Drucksensor bzw. Differenzdrucksensor mit einem asphärischen Membranbett aus Glas, welches durch thermisches Einsinken geformt ist.

Die Patentschrift US 7 360 431 B2 offenbart einen Drucksensor bzw. Differenzdrucksensor mit einem asphärischen Membranbett, welches in Silizium mittels Grauskalenlithographie präpariert ist.

Die Offenlegungsschrift DE 10 2010 028 773 A1 offenbart einen Drucksensor bzw. Differenzdrucksensor mit einem asphärischen Membranbett, welches in Silizium mittels Laserablation, gefolgt von einem Oxidationsschritt und einem abschließenden Ätzen präpariert ist.

In US 5 134 887 wird ein Drucksensor, welcher eine elastische Aufhängung einer Differenzdruckmesszelle zeigt, offenbart.

Wenngleich die genannten Membranbrettkonzepte tatsächlich die Messmembran zu einem gewissen Grade schützen können, belastet doch der in den Differenzdrucksensor eingeleitete statische Druck die Fügestellen zwischen Messmembran und Gegenkörpern oder daran angrenzende Bereiche, so dass dort Spannungsspitzen auftreten können, die zu einer Zerstörung des Differenzdrucksensors führen.

Abgesehen von beidseitig anstehenden statischen Überlastdrücken, kann auch eine einseitige Beaufschlagung der Differenzdruckmesszelle mit einem statischen Überlastdruck, die Messmembran, die Gegenkörper oder die Fügestellen zwischen Messmembran und Gegenkörpern oder daran angrenzende Bereiche beschädigen oder zerstören, wenn die einseitige Überlast zu Verformungen der Gegenkörper führt, wodurch beispielsweise die Stützfunktion der Membranbetten beeinträchtigt wird.

Um dem zu begegnen, offenbaren Hein et al. (Transducers '97 S. 1477 -1480, 1997) einen gekapselten kapazitiven Differenzdrucksensor, bei dem die Gegenkörper zwischen Druckanschlussstücken axial eingespannt sind, wobei jeweils zwischen einem Gegenkörper und einem Druckanschlussstück zusätzlich ein Dichtring eingespannt ist.

Das Patent DE 37 51 546 T2 offenbart ebenfalls einen Differenzdrucksensor, welcher eine Messmembran zwischen zwei Gegenkörpern aufweist, wobei die beiden Gegenkörper in einer elastischen Spannvorrichtung axial eingespannt sind, um die Berstfestigkeit des Differenzdrucksensors zu erhöhen.

Den beiden zuvor beschriebenen Anordnungen ist gemein, dass es bei einer Beaufschlagung des Differenzdrucksensors mit statischen Druck zu Relativbewegungen zwischen den Gegenkörpern und der Einspannvorrichtung kommen kann. Dies kann insbesondere zu Hysterese-Fehlern bei Nullpunkt und Spanne eines vom Differenzdruck abhängigen Messsignals des Differenzdrucksensors führen.

Es ist daher die Aufgabe der vorliegenden Erfindung, hier Abhilfe zu schaffen.

Die Aufgabe wird gelöst durch den Differenzdrucksensor gemäß dem unabhängigen Patentanspruch 1.

Der erfindungsgemäße Differenzdrucksensor 1 umfasst: eine Differenzdruckmesszelle mit einer Messmembran; einem ersten Gegenkörper; einem zweiten Gegenkörper, und einem Wandler; und
Eine elastische Einspannvorrichtung;
wobei die Messmembran zwischen dem ersten Gegenkörper und dem zweiten Gegenkörper angeordnet und mit beiden Gegenkörpern druckdicht verbunden ist,
wobei zwischen der Messmembran und dem ersten Gegenkörper eine erste Druckkammer und zwischen der Messmembran und dem zweiten Gegenkörper eine zweite Druckkammer gebildet ist,
wobei der erste Gegenkörper und der zweite Gegenkörper jeweils einen Druckkanal aufweisen, durch welchen die jeweilige Druckkammer mit einem ersten bzw. zweiten Druck ($p_1$, $p_2$) beaufschlagbar ist;
wobei der Wandler zum Wandeln einer von einer Differenz zwischen dem ersten Druck ($p_1$) und dem zweiten Druck ($p_2$) abhängigen Verformung der Messmembran in ein elektrisches Signal vorgesehen ist;
wobei die Einspannvorrichtung eine erste Spannfläche aufweist, welche auf eine der Messmembran abgewandte erste Rückseite des ersten Gegenkörpers einwirkt, und eine zweite Spannfläche, welche auf eine der Messmembran abgewandte zweite Rückseite des zweiten Gegenkörpers einwirkt,
wobei die Einspannvorrichtungen elastische Elemente aufweist, über welches die Spannflächen mechanisch gekoppelt sind, um die Differenzdruckmesszellen mit einer axialen Einspannkraft einzuspannen, wobei die erste und die zweite Spannfläche formsteif sind,
wobei die Einspannvorrichtung eine Klammer aufweist mit einem ersten Spannkörper, welcher die erste Spannfläche aufweist und einen zweiten Spannkörper, welcher die zweite Spannfläche aufweist,
wobei der erste und der zweite Spannkörper jeweils ein elastisches Element aufweist,
wobei der erste und der zweite Spannkörper unter Spannung miteinander verbunden sind, um eine Einspannkraft auf die Differenzdruckmesszelle auszuüben,
wobei beide Spannkörper einen zentralen formsteifen Abschnitt aufwiesen, welcher die Spannflächen umfasst, wobei an den formsteifen Abschnitt beider Spannkörper elastische Abschnitte anschließen, welche die elastischen Elemente bilden.

Anders ausgedrückt umfasst der erfindungsgemäße Differenzdrucksensor eine Differenzdruckmesszelle mit einer Messmembran, zwei Gegenkörpern, zwischen denen die Messmembran angeordnet ist, und einem Wandler, sowie eine elastische Einspannvorrichtung, welche zwei Spannflächen aufweist, welche jeweils auf eine der Messmembran abgewandte, erste Rückseite der Gegenkörpers einwirken, wobei die Einspannvorrichtung mindestens ein elastisches Element aufweist, über welches die Spannflächen mechanisch gekoppelt sind, um die Differenzdruckmesszellen mit einer axialen Einspannkraft einzuspannen, wobei die Spannflächen formsteif sind, wobei die Einspannvorrichtung eine Klammer mit zwei Spannkörpern aufweist, welcher jeweils eine der Spannflächen aufweisen, wobei mindestens einer der Spannkörper ein elastisches Element aufweist, die Spannkörper unter Spannung miteinander verbunden sind, um eine Einspannkraft auf die Differenzdruckmesszelle auszuüben wobei beide Spannkörper einen zentralen formsteifen Abschnitt aufweisen, welcher die Spannflächen umfasst, wobei an den formsteifen Abschnitt mindestens eines Spannkörpers, insbesondere beider Spannkörper elastische Abschnitte anschließen, welche die elastischen Elemente bilden.

Die Einspannvorrichtung bewirkt, dass Zug- oder Kerbspannungen, welche senkrecht zu einer Fügeebene zwischen der Messmembran und den Gegenkörpern oder zwischen anderen Schichten der Differenzdruckmesszelle wirken und ggf. zum Versagen des Sensors beitragen, durch eine kompressive Vorspannung überlagert werden.

Die Einspannvorrichtung dient insbesondere dazu, eine reproduzierbare und langzeitstabile Vorspannung zu erzeugen. Dazu werden zwei gegenüberliegende Spannkörper, die den Sensor einschließen, gezielt elastisch verformt und - insbesondere durch Verschweißen - miteinander verbunden.

In einer Weiterbildung der Erfindung umfassen die elastischen Elemente Federschenkel, wobei die axiale Einspannkraft, welche auf die Gegenkörper einwirkt, durch eine elastische Biege-Auslenkung der Federschenkel aus ihrer Ruhelage aufgebracht wird.

In einer Weiterbildung der Erfindung weisen die Gegenkörper jeweils einen Kammerkörper auf, in denen Vertiefungen für die Druckkammern ausgebildet sind, und jeweils einen Versteifungskörper, wobei die Versteifungskörper jeweils zwischen den Kammerkörpern und den Spannflächen angeordnet sind.

In einer Weiterbildung der Erfindung weisen die Versteifungskörper einen Werkstoff auf, dessen Wärmeausdehnungskoeffizient um nicht mehr als 5 ppm/K vorzugsweise nicht mehr als 2 ppm/K vom Wärmeausdehnungskoeffizienten des Werkstoffs der Kammerkörper abweicht.

In einer Weiterbildung der Erfindung ist der Differenzdrucksensor für einen statischen Überlastdruck $p_L$ spezifiziert, und wobei die Messmembran (10) eine mit einem Druck ($p_1$, $p_2$) beaufschlagbare Fläche A aufweist, wobei eine Einspannkraft F, mit welcher die Einspannvorrichtung (50) die Differenzdruckmesszelle einspannt, als

$$F = S \cdot p_L \cdot\cdot A$$

umschrieben werden kann, wobei der Sicherheitsfaktor S nicht weniger als 0,2, vorzugsweise nicht weniger als 0,5 und besonders bevorzugt nicht weniger als 0,8 beträgt.

In einer Weiterbildung der Erfindung erfüllt die Einspannkraft F die oben genannten Bedingungen, dass die Einspannkraft F, mit welcher die Einspannvorrichtung (50) die Differenzdruckmesszelle einspannt, als

$$F = S \cdot pL \cdot A$$

umschrieben werden kann, wobei der Sicherheitsfaktor S nicht weniger als 0,2, vorzugsweise nicht weniger als 0,5 und besonders bevorzugt nicht weniger als 0,8 beträgt, über einen Temperaturbereich zwischen 0 °C und 100 °C, insbesondere zwischen -20 °C und 150 °C und bevorzugt zwischen -40 °C und 180 °C.

In einer Weiterbildung der Erfindung variiert die Einspannkraft über einen Temperaturbereich zwischen 0 °C und 100 °C, insbesondere zwischen -20 °C und 150 °C und bevorzugt zwischen -40 °C und 180 °C bei einem konstanten Druck, der kleiner als der Überlastdruck PL ist, um nicht mehr als die Hälfte, bevorzugt nicht mehr als 2/5 besonders bevorzugt nicht mehr als 1/3 einer maximalen Einspannkraft in dem Temperaturbereich.

In einer Weiterbildung der Erfindung weisen die Spannkörper einen Werkstoff auf, dessen Wärmeausdehnungskoeffizient nicht mehr als 5 ppm/K, insbesondere nicht mehr als 2 ppm/K und bevorzugt nicht mehr als 1 ppm/K vorm Wärmeausdehnungskoeffizienten des Werkstoffs der Versteifungskörper abweicht.

In einer Weiterbildung der Erfindung ist eine maximale Spannung, die an der Einspannvorrichtung auftritt, kleiner als $\sigma_{02}$ des Werkstoffs der Einspannvorrichtung im Bereich dieser maximalen Spannung.

In einer Weiterbildung der Erfindung weist die Einspannvorrichtung, einen metallischen Werkstoff aufweist, insbesondere Kovar oder Stahl.

In einer Weiterbildung der Erfindung weisen die Versteifungskörper monokristallines oder polykristallines Silizium oder einen keramischen Werkstoff auf, insbesondere AIN, SiC, SiN oder Cordierit.

Die Erfindung wird nun anhand des in der Zeichnung dargestellten Differenzdrucksensors erläutert, es zeigt:

Fig. 1: einen schematischen Längsschnitt durch ein Ausführungsbeispiel eines erfindungsgemäßen Differenzdrucksensors;

Fig. 2: eine schematische Seitenansicht eines zweiten Ausführungsbeispiels eines erfindungsgemäßen Differenzdrucksensors;

Fig. 3: eine schematische Seitenansicht der Verbindungsstellen zwischen zwei Einspannkörpern eines dritten Ausführungsbeispiels eines erfindungsgemäßen Differenzdrucksensors;

Fig. 4: eine Detailansicht eines Einspannkörpers eines vierten Ausführungsbeispiels eines erfindungsgemäßen Differenzdrucksensors; und

Fig. 5a bis 5c: Diagramme zur Dimensionierung der Einspannvorrichtung.

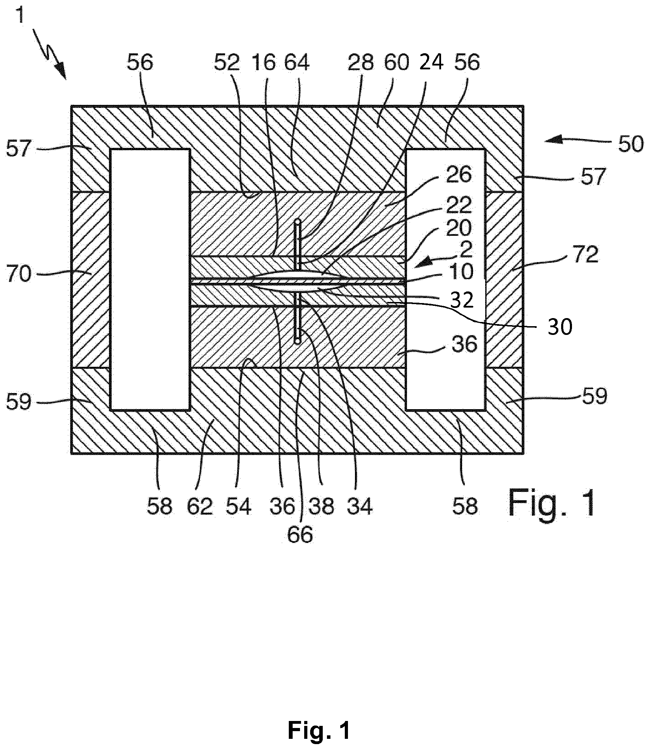

Der in Fig. 1 dargestellte Differenzdrucksensor 1 umfasst eine Differenzdruckmesszelle 2, mit einer Messmembran 10, einem ersten Gegenkörper 20 und einem zweiten Gegenkörper 30, wobei die Messmembran 10 zwischen dem ersten Gegenkörper und dem zweiten Gegenkörper angeordnet und mit beiden Gegenkörpern entlang einer umlaufenden Fügestelle druckdicht verbunden ist, so dass zwischen dem ersten Gegenkörper und der Messmembran eine erste Druckkammer 22 und zwischen dem zweiten Ge und der Messmembran eine zweite Druckkammer gebildet ist. Die Druckkammern sind jeweils über eine Druckzuleitung 24,34 mit einem ersten bzw. zweiten Druck beaufschlagbar, wobei die Messmembran in Abhängigkeit von einer Differenz zwischen den beiden Drücken auslenkbar ist, und wobei die Differenzdruckmesszelle einen insbesondere kapazitiven oder piezoresistiven Wandler aufweist, um die Auslenkung der Messmembran in ein elektrisches Signal zu wandeln. Einzelheiten zu diesen Wandlerprinzipien sind dem Fachmann auf dem Gebiet der Druckmesstechnik an sich bekannt und brauchen daher hier nicht näher erläutert zu werden.

Die Messmembran 10 weist insbesondere monokristallines Silizium auf, wobei die Gegenkörper Silizium oder Glas aufweisen können. Die Messmembran ist mit den Gegenkörpern beispielsweise durch Fusionbonding gefügt, wobei zwischen einer Messmembran aus Silizium und Silizium-Gegenkörpern eine Siliziumoxydschicht vorgesehen sein kann. In dieser Siliziumoxydschicht kann zudem ein Membranbett ausgebildet sein, welches die Druckkammer begrenzt, und an dem sich die Messmembran im Falle einer einseitigen Überlast abstützen kann. Das Membranbett kann beispielsweise durch kontrolliertes Unterätzen gebildet werden, wie es in der Patentanmeldung DE 10 2012 109 587 beschrieben ist. Die Druckzuleitungen münden insbesondere am tiefsten Punkt der Membranbetten in deren Zentrum in die Druckkammern. Zwischen einem Randbereich der Gegenkörpern, in denen die Gegenkörper mit der Messmembran gefügt sind, und den Membranbetten kann jeweils ein (hier nicht dargestellter) ringförmiger Graben in den Gegenkörpern präpariert sein, um die jeweilige Fügestelle zwischen der Messmembran und dem Gegenkörper von Kerbspannungen zu entlasten. Wie in der Zeichnung dargestellt, können die Gegenkörper jeweils zweiteilig gefertigt sein, wobei sie einen Kammerkörper und einen Versteifungskörper aufweisen.

Die Gegenkörper sind im dargestellten Ausführungsbeispiel zweiteilig gestaltet, d.h. sie umfassen jeweils einen Kammerkörper 20,30, in dem eine durch ein Membranbett begrenzte Vertiefung präpariert ist, welche das Volumen der jeweiligen Druckkammer 22, 32 bildet, wobei die Kammerkörper 20, 30 jeweils mit einer Seite der Messmembran 10 gefügt sind. Weiterhin umfassen die Gegenkörpern jeweils einen Versteifungskörper 26, 36, der insbesondere eine planparallele Platte umfasst und mit einer ersten Plattenfläche mit einer der Messmembran abgewandten Rückseite eines Kammerkörpers 20, 30 vollflächig gefügt ist.

Durch die Versteifungskörper 26, 36 kann sich jeweils ein Kanalabschnitt 28, 38 der Druckzuleitungen 24, 34 erstrecken. Um der jeweiligen Druckkammer 22, 32 einem Mediendruck zuzuführen. Beispielsweise können die Kanalabschnitte 28,38 einen ihren, den Kammerkörper abgewandten Endabschnitten mit Kapillarleitungen kommunizieren, welche druckdicht mit den Versteifungskörpern verbunden sind, und welche den Drucksensor tragen.

Die Kanalabschnitte 28, 38 weisen jeweils insbesondere zwei Teilabschnitte auf, die aneinander anschließen und in unterschiedlichen Richtungen verlaufen, insbesondere rechtwinklig zueinander. Ein erster Teilabschnitt schließt jeweils fluchtend an eine Druckzuleitung 24, 34 in einem Kammerkörper an, und verläuft insbesondere im wesentlichen senkrecht zur Verbindungsfläche zwischen dem Kammerkörper und dem Versteifungskörper, der zweite Teilabschnitt mündet an einer anderen Seitenfläche des Versteifungskörpers, insbesondere an einer Unterseite. Wobei dort Kapillarleitungen an den Versteifungskörper angeschlossen sein können, welche den Drucksensor tragen.

Die Differenzdruckmesszelle 2 ist schließlich von einer Einspannvorrichtung 50 axial vorgespannt, wobei die Einspannvorrichtung 50 einen ersten Spannkörper 60 und einen zweiten Spannkörper 62 aufweist. Die Spannkörper 60, 62 weisen jeweils einen formsteifen Abschnitt 64, 66 auf, der in der Mitte der Spannkörper 60, 62 angeordnet ist. Die formsteifen Abschnitte 64, 66 weisen jeweils eine ebene Spannfläche 52, 54 auf, welche vollflächig an einer den Kammerkörpern 20, 30 abgewandten Rückseite der Versteifungskörper 26, 36 anliegt.

Beidseitig an den formsteifen Abschnitt 64, 66 angrenzend weisen die Spannkörper jeweils elastische Abschnitte 56, 58 auf, welche in axialer Richtung der Differenzdruckmesszelle, also in Richtung der Oberflächennormalen der Spannflächen, eine geringere Materialstärke als die formsteifen Abschnitte 64, 66 aufweisen und daher wie Federschenkel wirken. Angrenzend an die elastischen Abschnitte 56, 58 weisen die Spannkörper 60, 62 beidseitig Endabschnitte 57, 59 mit mindestens der Materialstärke der formsteifen Abschnitte 64, 66 auf. Die Spannkörper sind vorzugsweise jeweils monolithisch ausgebildet, um Relativbewegungen zwischen Grenzflächen innerhalb des Spannkörpers zu vermeiden, da derartige Relativbewegungen zu Hysterese-Effekten bei der Druckmessung führen können.

Die beiden Endabschnitte 57 des ersten Spannkörpers 60 sind jeweils mit dem gegenüberliegenden Endabschnitt 59 des zweiten Spannkörpers durch unter Zugspannung stehende Zugstangen 70, 72 verbunden, wobei die Endabschnitte unter axiale Kompression mit den Zugstangen verschweißt wurden. Durch diese Konstruktion wird die Differenzdruckmesszelle 2 mit einer axialen Einspannkraft seitens der Einspannvorrichtung 50 beaufschlagt, welche einem Bersten der Differenzdruckmesszelle bei hohen statischen Drücken, die in die Druckkammer eingeleitet sind entgegenwirkt.

Anstelle des Fügens der Endabschnitte mit den Zugstangen kann auch eine Verschraubung mit Bolzen vorgesehen sein, wozu dann durchgehende Bohrungen in axialer Richtung durch die Endabschnitte der Spannkörper und Abstandhalter zu führen sind, durch welche Bolzen geführt werden, wobei die Abstandhalter die Zugstangen ersetzen, da in diesem Fall die Zugspannung durch die Bolzen aufgebracht wird, und die Abstandhalter lediglich den Abstand zwischen den Endabschnitten der Spannkörper definieren, wodurch die Einspannkraft, welche auf die Differenzdruckmesszelle wirkt, festgelegt ist.

Die durch die Spannvorrichtung aufgebrachte Einspannkraft kann aber muss nicht die gesamte aufgrund eines statischen Drucks in den Druckkammern auftretende Kraft in axialer Richtung aufnehmen, jedenfalls sollte die Einspannkraft ausreichen, um die in den Fügestellen zwischen der Messmembran und den Kammerkörpern auftretenden Spannungen zuverlässig unterhalb der Berstspannung für die jeweiligen Materialkombinationen zu halten.

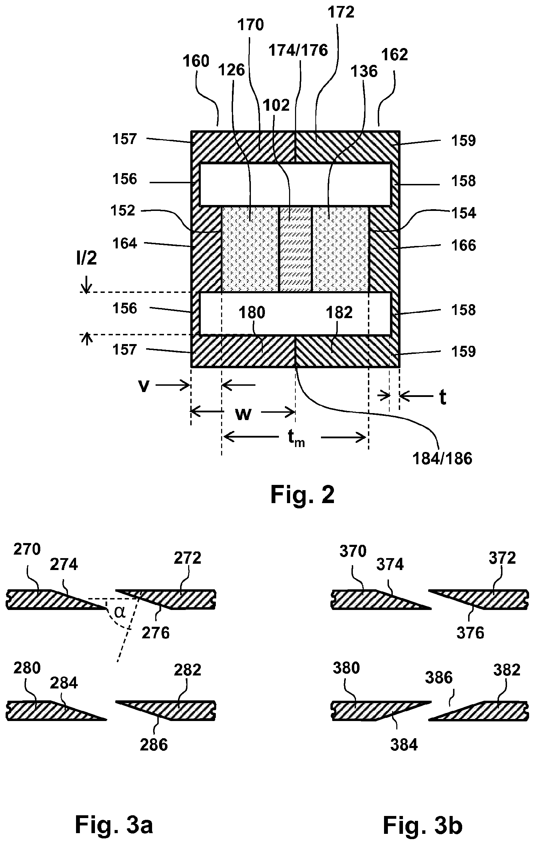

Im Folgenden werden anhand des in Fig. 2 skizzierten Ausführungsbeispiels eines erfindungsgemäßen Differenzdruckmessaufnehmers weitere Gesichtspunkte der Erfindung Einspannvorrichtung dargestellt.

Ein versteifter Bereich 164, 166 eines Spannkörpers 160, 162, welcher einen Gegenkörper 126, 136 kontaktiert, ist möglichst steif um einen zuverlässigen, flächigen Kontakt entlang seiner Einspannfläche 152, 154 zum insbesondere keramischen Gegenkörper herzustellen. Dieser Kontakt kann beispielsweise über eine Klebung sichergestellt werden.

Zum Einbringen einer kompressiven Spannung werden elastische Elemente in Gestalt von Federschenkeln 156, 158, die im Vergleich zu den biegesteifen Bereichen 164, 166 dünner sind, durch eine definierte Kraft F auf biegesteife Endabschnitte 157, 159 ausgelenkt, die an die freien Enden der Federschenkel 156, 158 anschließen, wobei die Endabschnitte als Verbindungselemente 170, 180, 172, 182 ausgebildet sind, deren Längsrichtung in Richtung der Einspannkraft F verläuft, wobei die Verbindungselemente 170, 180 des ersten Spannkörpers im gespannten Zustand jeweils mit einem gegenüberliegenden Verbindungselement 172, 182 des zweiten Spannkörpers verbunden werden, insbesondere durch Verschweißen. Auf Grund der Verbindung der beiden Spannkörper wirkt nach dem Entfernen der äußeren Kraft eine äquivalente kompressive axiale Vor-

spannung $\sigma_k = F/A$ in der Druckmesszelle, wobei A die Fügefläche zwischen der Messmembran und den Gegenkörpern bezeichnet. Bei einer Fügefläche von $(4.15\ \text{mm})^2 \cdot \pi (1.1\ \text{mm})^2 = 13.4\ \text{mm}^2$ und einer gewünschten kompressiven Spannung von beispielsweise $\sigma_k = 100$ MPa ergibt sich eine minimale notwendige Kraft von $F_{min} = 1340\ N$, die auf den Sensor wirken muss.

Die dazu erforderliche Auslenkung der elastischen Elemente bzw. Federschenkel oder Biegebalken 156, 158 kann über eine einfache Biegebalkengleichung abgeschätzt werden.

Die elastischen Elemente B werden so ausgelegt, dass sie bei der notwenigen Kraft F nicht plastisch verformt werden. Als Grenze wird die Biegespannung an der Balkenoberfläche betrachtet, die kleiner als die Streckgrenze bzw. $\sigma_{0.2\%}$ des Werkstoffs der elastischen Elemente sein soll, wobei der Werkstoff insbesondere ein Metall umfasst.

Der Werkstoff der Einspannvorrichtung können so gewählt werden, dass sie einen ähnlichen thermischen Ausdehnungskoeffizienten $\alpha$ wie die Versteifungskörper der Gegenkörper aufweisen. Das hat den Vorteil, dass sich die Geometrie der Einspannvorrichtung bei Temperaturänderungen ähnlich ändert wie die der Versteifungskörper, so dass die Einspannkraft nur minimal schwankt. Beispielsweise werden bevorzugt Metalle wie Kovar, Wolfram und Titan bzw. weitere Metalle mit einem Ausdehnungskoeffizienten $\alpha_M$ nahe dem $\alpha_K$ von den Keramiken AlN bzw. $Si_3N_4$ gewählt, welche ein bevorzugtes Material für die Versteifungskörper sind.

Aus dem Unterschied der Ausdehnungskoeffizienten von Keramik $\alpha_K$ und metallischer Einspannvorrichtung $\alpha_M$, der Stärke $t_m$ der Differenzdruckmesszelle einschließlich der Versteifungskörper in Richtung der Einspannkraft und der maximalen Einsatztemperaturspanne $\Delta T_S$ ergibt sich eine Bedingung für die minimale Auslenkung $w_0$ $(t, T_0=30°C)$ der beweglichen Elemente der Klammer während des Verbindungsvorgangs:

Ziel ist eine maximale Änderung der kompressiven Kraft von $\pm 30\%$ über den Einsatztemperaturbereich von -60°C bis 150°C. Da die kompressive Kraft proportional zur Auslenkung der Verbindungselemente ist, muss folgender Zusammenhang gelten:

$$-0.3\, w_0(t, T_0) \leq \Delta w(t, T) \leq 0.3\, w_0(t, T_0)$$

Vereinfacht, lässt sich folgende Näherung für die minimale Auslenkung $w_0$ $(I, T_0)$ angeben:

$$\Leftrightarrow w_0(l, T_0) \geq \frac{\Delta w(l, T)}{0.3} = \frac{t_m\, |\alpha_e - \alpha_m| \frac{\Delta T}{2}}{0.3}$$

Für ein 15 mm starkes Sensorelement, einem Unterschied $\Delta\alpha$ zwischen dem thermischen Ausdehnungskoeffizienten $\alpha_e$ des metallischen Werkstoffs der Einspannvorrichtung und dem effektiven Wärmeausdehnungskoeffizienten $\alpha_m$ der Differenzdruckmesszelle von 2 ppm/K und einer Temperaturspanne von 200 K ergibt sich eine maximale Schwankung der Auslenkung der Einspannvorrichtung von 6 $\mu$m. Da sich die Schwankung gleichmäßig auf beide Seiten der Klammer verteilt, muss jede Seite eine Schwankung von 3 $\mu$m bzw. +/- 1,5 $\mu$m um die Auslenkung bei der mittleren Temperatur aufnehmen. Damit die obige Bedingung eingehalten ist, muss die Auslenkung bei mittlerer Temperatur etwa 5 $\mu$m betragen. Mit einer entsprechenden Federkonstanten der Federschenkel ist damit gewährleistet, dass die minimale Einspannkraft genau den geforderten 1340 N entspricht.

Hierbei zeigt sich, dass Fertigungstoleranzen eine genaue Einstellung der Einspannkraft erschweren, denn die Länge der Differenzdruckmesszelle $I_m$ muss gleich der doppelten Länge w der Verbindungsstücke abzüglich der doppelten Länge v der Versteifungskörper plus der doppelten mittleren Auslenkung der Spannkörper bei der mittleren Raumtemperatur $(T_{max} + T_{min}) / 2$ sein.

Im obigen Zusammenhang sind die Verbindungen zwischen den beiden Spannkörpern von besonderem Interesse. Eine einfache Variante, bei welcher die Oberflächennormalen der zu verbindenden Fügeflächen 174/176 184/186 parallel zur Richtung der Einspannkraft F laufen, wie in Fign. 1 und 2 gezeigt, hat den Nachteil, dass Fertigungstoleranzen bezüglich der Länge I/2 und der Stärke t der Federschenkel 156, 158, welche deren Federkonstante definieren, sowie der Länge w der Verbindungselemente 170, 172, 180, 182 und der Stärke v der Versteifungselemente 164, 166, welche zusammen mit der ebenfalls toleranzbehafteten Stärke $t_m$ der Differenzdruckmesszelle die Auslenkung der elastischen Elemente definieren, nicht ausgeglichen werden können. Das führt ggf. zu sehr großen Variationen der kompressiven axialen Vorspannung der Druckmesszelle.

Um die kompressive Vorspannung dennoch einstellen zu können, muss die Auslenkung der elastischen Elemente so frei wählbar sein, dass die obigen Fertigungstoleranzen ausgeglichen werden können. Hierzu sind beispielsweise Verbindungselemente zwischen den Spannkörpern geeignet, deren parallele Fügeflächen tangential gegeneinander verschiebbar sind. Damit das Produkt der Federkonstanten der elastischen Elemente und deren Auslenkung die gewünschte Vorspanungskraft erreichen kann.

Vorteilhafte Verbindungselemente 270, 272, 280, 282; 370, 372, 380, 382 sind beispielsweise in Fign. 3a und 3b dargestellt. Dabei ist der Normalenvektor der Fügeflächen 274, 276, 284, 286; 374, 376, 384, 386 in einem Winkel $\alpha$ gegenüber der Wirkrichtung der Einspannkraft verschweißt, wobei insbesondere gilt, $\alpha \geq 30°$, vorzugsweise $\alpha \geq 45°$, und besonders bevorzugt $\alpha \geq 60°$. Bei der Montage der Einspannvorrichtung um die Differenzdruckmesszelle werden die Verbindungselemente 270, 272, 280, 282; 370, 372, 380, 382 der Einspannkörper dann mit einer Kraft F gegeneinander gespannt und in dieser gespannten Position miteinander verschweißt. In Fig 3a sind alle vier Fügeflächen 274, 276, 284, 286 parallel zueinander, so dass die Verspannung der Einspannkörper weitgehend frei von Biegemomenten erfolgen kann. Bei der Anordnung in Fig. 3b sind die Fügeflächen 374, 384 eines ersten Einspannkörpers nach außen geneigt, und die Fügeflächen 376, 386 des zweiten nach innen. Bei einer tangentialen Verschiebung der Fügeflächen werden daher die Verbindungselemente des ersten Einspannkörpers nach innen gedrückt und die des zweiten nach innen. Die führt zu Biegemomenten welche die Ruhelage der Spannfläche des ersten Einspannkörpers etwas nach hinten versetzt und die Ruhelage der Spannfläche des zweiten etwas nach vorne. Insofern entsteht eine leichte Asymmetrie zwischen den Einspannkörpern, die sich aber weitgehend gegenseitig kompensiert und die Wirksamkeit der Einspannvorrichtung nicht beeinträchtigt.

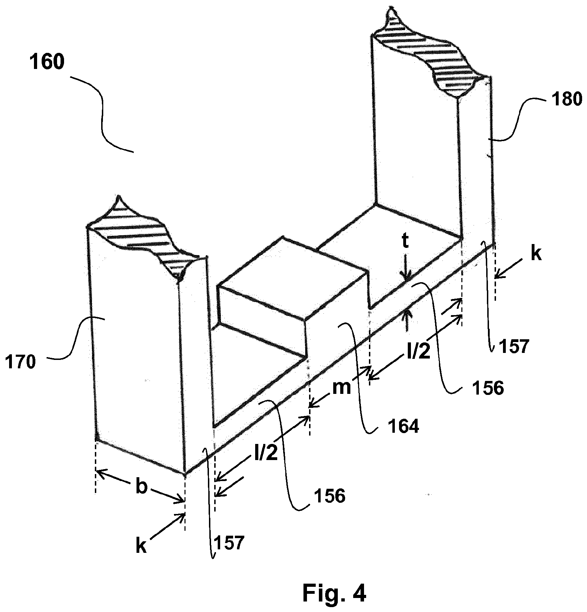

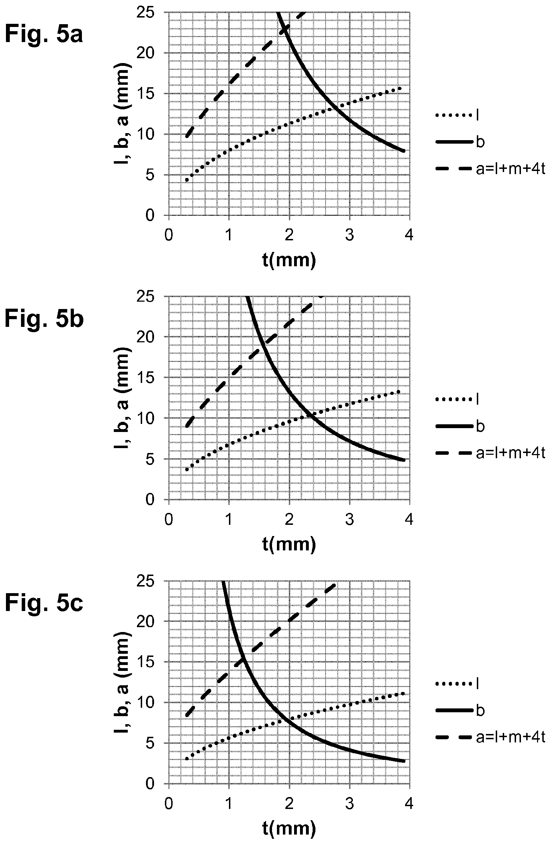

Um die hydraulischen und/oder elektrischen Anschlüsse der Differenzdruckmesszelle zugänglich zu halten, ist die Einspannvorrichtung lediglich in Form von Biegebalken bzw. Federschenkeln in einer Ebene realisiert. Beispiele zur Dimensionierung der Einspannvorrichtung werden nun anhand der Fign. 4 und 5a bis c erläutert.

Fig. 4 zeigt eine Detailansicht eines Einspannkörpers mit den im Folgenden beachtlichen Bemaßungen. Aus der minimalen Einspannkraft $F_{min}$, der maximal zulässigen Einspannkraft $F_{max} = F_{min} \cdot (1 + \Delta) / (1 - \Delta)$, der Stärke $t_m$ der Differenzdruckmesszelle der Differenz $\Delta\alpha$ zwischen dem Wärmeausdehnungskoeffizienten des Material der Einspannvorrichtung und dem effektiven Wärmeausdehnungskoeffizienten der Differenzdruckmesszelle, dem spezifizierten Temperatureinsatzbereich zwischen einer Minimaltemperatur $T_{min}$ und einer Maximaltemperatur $T_{max}$ sowie dem Elastizitätsmodul und der Streckgrenze des Materials der Einspannvorrichtung können mögliche minimale Dimensionen der Federschenkel und damit der Einspannvorrichtung ermittelt werden.

Ergebnisse dazu sind in Fign. 5a bis 5c für Einspannkörper aus Kovar mit den Parametern $t_m$ = 15 mm, $\Delta\alpha$ = 2ppm/K, $T_{max} - T_{min}$ = 200 K und eine quadratische Grundfläche m · m der Differenzdruckmesszelle von 4,15 mm · 4,15 mm dargestellt. Die zulässigen relativen Änderungen $\Delta$ der Einspannkraft F um ihren Mittelwert beträgt 0,2 in Fig. 5a, 0,3 in Fig. 5b und 0,5 in Fig. 5c.

Für eine gegebene Stärke t der Federschenkel, folgen Längen I/2 und Breiten b, mit denen die erforderliche Federkonstante zum Erfüllen der obigen Bedingungen ohne Überschreiten der Streckgrenze bei maximaler Auslenkung erzielt werden. So ergibt sich beispielsweise bei einer Stärke der Federschenkel von $t_m$ = 2 mm und $\Delta$ = 0,2 eine Länge der Federschenkel von I/2 ≈ 5,6 mm bei einer Breite b ≈ 24,4 mm. Die Gesamterstreckung a der Einspannkörper in Längsrichtung der Federschenkel ist aber größer, denn es sind noch die Kantenlänge m = 4,15 mm der Differenzdruckmesszelle d, welche der minimalen Länge des Versteifungselements C entspricht, sowie zweimal das Maß k der Verbindungselemente in Längsrichtung der Federschenkel zu addieren. Da die Verbindungselemente steifer sein sollen als die Federschenkel, kann man beispielsweise k = 2 t ansetzen. Damit ergibt sich die Gesamterstreckung als a = I + m + 4 t. Für eine möglichst geringe maximale Kantenlänge der Fläche a, b ergeben sich mit $\Delta$ = 0,2 die folgenden Werte: t ≈ 1,96 mm und a = b ≈ 22,6 mm. Wenn größere relative Änderungen der Einspannkraft zulässig sind kann die Einspannvorrichtung kompakter ausgelegt werden. So gilt mit $\Delta$ = 0,3: t ≈ 1,6 mm: a = b ≈ 19 mm, und mit $\Delta$ = 0,3: t ≈ 1,25 mm: a = b ≈ 15,5 mm, um die maximale Kantenlänge der Fläche a, b möglichst gering zu halten.

Aus den Diagrammen ist ersichtlich, dass die Fläche a,b bei einer Minimierung der maximalen Kantenlängen jeweils den größten Flächenwert einnehmen, so dass die Einspannvorrichtung ein größeres Volumen in einem Gehäuse einnimmt. Sollte dagegen eine Volumenminimierung angestrebt werden, so kann die Breite b bis auf die Kantenlänge m der Differenzdruckmesszelle begrenzt werden. In diesem Fall steigt das Maß für die Längserstreckung jedoch erheblich an.

Für $\Delta$ = 0,3: kann mit t ≈ 2 mm und b= 13 mm die Längserstreckung auf a = 21,5 mm begrenzt werden. Die Breite b = 13 mm bedingt einen Überstand des Einspannkörpers von etwa 4,55 mm auf beiden Seiten der Differenzdruckmesszelle, dies schränkt zwar den Raumwinkel ein, über den die Differenzdruckmesszelle von den offenen Seiten des Einspannkörpers zugänglich ist, steht aber einer elektrischen oder hydraulischen Kontaktierung der Messzelle nicht entgegen.

## Patentansprüche

1. Differenzdrucksensor (1), umfassend:

eine Differenzdruckmesszelle (2) mit einer Messmembran (10), einem ersten Gegenkörper (20), einem zweiten Gegenkörper (30), und einem Wandler,
und eine elastische Einspannvorrichtung (50);
wobei die Messmembran (10) zwischen dem ersten Gegenkörper (20) und dem zweiten Gegenkörper (3) angeordnet und mit beiden Gegenkörpern druckdicht verbunden ist, wobei zwischen der Messmembran (10) und dem ersten Gegenkörper (20) eine erste Druckkammer (22) und zwischen der Messmembran (10) und dem zweiten Gegenkörper (30) eine zweite Druckkammer (32) gebildet ist, wobei der erste Gegenkörper (20) und der zweite Gegenkörper (30) jeweils einen Druckkanal (24, 34) aufweisen, durch welchen die jeweilige Druckkammer (22, 32) mit einem ersten bzw. zweiten Druck ($p_1$, $p_2$) beaufschlagbar ist,

wobei der Wandler (40) zum Wandeln einer von einer Differenz zwischen dem ersten Druck ($p_1$) und dem zweiten Druck ($p_2$) abhängigen Verformung der Messmembran (10) in ein elektrisches Signal vorgesehen ist;

wobei die Einspannvorrichtung (50) eine erste Spannfläche (52) aufweist, welche auf eine der Messmembran (10) abgewandte, erste Rückseite (26) des ersten Gegenkörpers (20) einwirkt, und eine zweite Spannfläche (54), welche auf eine der Messmembran (10) abgewandte zweite Rückseite (36) des zweiten Gegenkörpers (30) einwirkt, wobei die Einspannvorrichtung (50) elastische Elemente (56, 58) aufweist, über welche die Spannflächen (52, 54) mechanisch gekoppelt sind, um die Differenzdruckmesszellen (2) mit einer axialen Einspannkraft einzuspannen, wobei die erste und die zweite Spannfläche (52, 54) formsteif sind, wobei die Einspannvorrichtung (50) eine Klammer aufweist mit einem ersten Spannkörper (60), welcher die erste Spannfläche (52) aufweist und einen zweiten Spannkörper (62), welcher die zweite Spannfläche (54) aufweist, wobei der erste und der zweite Spannkörper jeweils ein elastisches Element (56, 58) aufweist,

wobei der erste und der zweite Spannkörper unter Spannung miteinander verbunden sind, um eine Einspannkraft auf die Differenzdruckmesszelle auszuüben wobei beide Spannkörper (60, 62) einen zentralen formsteifen Abschnitt aufweisen (64, 66), welcher die Spannflächen (52, 54) umfasst, wobei an den formsteifen Abschnitten (64, 66) beider Spannkörper elastische Abschnitte anschließen, welche die elastischen Elemente (56, 58) bilden.

2. Differenzdrucksensor nach Anspruch 1, wobei die elastischen Elemente Federschenkel umfassen, wobei die axiale Einspannkraft, welche auf die Gegenkörper einwirkt, durch eine elastische Biege-Auslenkung der Federschenkel aus ihrer Ruhelage aufgebracht wird.

3. Differenzdrucksensor nach Anspruch 1 oder 2, wobei die Gegenkörper (20, 30) jeweils einen Kammerkörper aufweisen, in denen Vertiefungen für die Druckkammern (22, 32) ausgebildet sind, und jeweils einen Versteifungskörper, wobei die Versteifungskörper jeweils zwischen den Kammerkörpern und den Spannflächen angeordnet sind.

4. Differenzdrucksensor nach Anspruch 3, wobei die Versteifungskörper einen Werkstoff aufweisen, dessen Wärmeausdehnungskoeffizient um nicht mehr als 5 ppm/K vorzugsweise nicht mehr als 2 ppm/K vom Wärmeausdehnungskoeffizienten des Werkstoffs der Kammerkörper abweicht.

5. Differenzdrucksensor nach einem der vorhergehenden Ansprüche,
wobei der Differenzdrucksensor für einen statischen Überlastdruck $p_L$ spezifiziert ist, und wobei die Messmembran (10) eine mit einem Druck ($p_1$, $p_2$) beaufschlagbare Fläche A aufweist, wobei eine Einspannkraft F, mit welcher die Einspannvorrichtung (50) die Differenzdruckmesszelle einspannt, als

$$F = S \cdot p_L \cdot A$$

umschrieben werden kann, wobei der Sicherheitsfaktor S nicht weniger als 0,2, vorzugsweise nicht weniger als 0,5 und besonders bevorzugt nicht weniger als 0,8 beträgt.

6. Differenzdrucksensor nach Anspruch 5,
wobei die Einspannkraft F die genannten Bedingungen, dass die Einspannkraft F, mit welcher die Einspannvorrichtung (50) die Differenzdruckmesszelle einspannt, als

$$F = S \cdot p_L \cdot A$$

umschrieben werden kann, wobei der Sicherheitsfaktor S nicht weniger als 0,2, vorzugsweise nicht weniger als 0,5 und besonders bevorzugt nicht weniger als 0,8 beträgt, über einen Temperaturbereich zwischen 0 °C und 100 °C, insbesondere zwischen -20 °C und 150 °C und bevorzugt zwischen -40 °C und 180 °C erfüllt.

7. Differenzdrucksensor nach einem der vorhergehenden Ansprüche,
wobei die Einspannkraft über einen Temperaturbereich zwischen 0 °C und 100 °C, insbesondere zwischen -20 °C und 150 °C und bevorzugt zwischen -40 °C und 180 °C bei einem konstanten Druck, der kleiner als der Überlastdruck PL ist, um nicht mehr als die Hälfte, bevorzugt nicht mehr als 2/5 besonders bevorzugt nicht mehr als 1/3 einer maximalen Einspannkraft in dem Temperaturbereich variiert.

8. Differenzdrucksensor nach einem der vorhergehenden Ansprüche,
wobei die Spannkörper einen Werkstoff aufweisen, dessen Wärmeausdehnungskoeffizient nicht mehr als 5 ppm/K, insbesondere nicht mehr als 2 ppm/K und bevorzugt nicht mehr als 1 ppm/K vorm Wärmeausdehnungskoeffizienten des Werkstoffs der Versteifungskörper abweicht.

9. Differenzdrucksensor nach einem der vorhergehenden Ansprüche,
wobei eine maximale Spannung, die an der Einspannvorrichtung (50) auftritt, kleiner als $\sigma_{02}$ des Werkstoffs der Einspannvorrichtung im Bereich dieser maximalen Spannung ist.

10. Differenzdrucksensor nach einem der vorhergehenden Ansprüche, wobei die Einspannvorrichtung, einen metallischen Werkstoff aufweist, insbesondere Kovar oder Stahl.

11. Differenzdrucksensor nach einem der vorhergehenden Ansprüche, wobei die Versteifungskörper monokristallines oder polykristallines Silizium oder einen Keramischen Werkstoff aufweisen, insbesondere AIN, SiC, SiN, oder Cordierit.

**Claims**

1. Differential pressure sensor (1), comprising a differential pressure measuring cell (2) with a process isolating diaphragm (10), a first counter-body (20), a second counter-body (30) and a converter, and an elastic clamping device (50);
   wherein the process isolating diaphragm (10) is arranged between the first counter-body (20) and the second counter-body (3) and is connected in a pressure-tight manner with both counter-bodies, wherein a first pressure chamber (22) is formed between the process isolating diaphragm (10) and the first counter-body (20) and a second pressure chamber (32) is formed between the process isolating diaphragm (10) and the second counter-body (30), wherein the first counter-body (20) and the second counter-body (30) each have a pressure channel (24, 34) by means of which the first and the second pressure (p1, p2) can be applied to the respective pressure chamber (22, 32),
   wherein the converter (40) is provided to convert a deformation of the process isolating diaphragm, which depends on a difference between the first pressure (p1) and the second pressure (p2), into an electrical signal;
   wherein the clamping device (50) has a first clamping surface (52) which acts on a first rear side (26) of the first counter-body (20), said side facing away from the process isolating diaphragm (10), and a second clamping surface (54) which acts on a second rear side (36) of the second counter-body (30), said side facing away from the process isolating diaphragm (10), wherein the clamping device (50) features elastic elements (56, 58) via which the clamping surfaces (52, 54) are coupled mechanically in order to clamp the differential pressure measuring cells (2) with an axial clamping force, wherein the first and the second clamping surface (52, 54) are rigid, wherein the clamping device (50) has a clip with a first clamping body (60), which features the first clamping surface (52), and a second clamping body (62), which features the second clamping surface (54), wherein the first and the second clamping body each have an elastic element (56, 58), wherein the first and second clamping body are connected with one another under tension in order to exert a clamping force on the differential pressure measuring cell, wherein the two clamping bodies (60, 62) have a central rigid section (64, 66), which encompasses the clamping surfaces (52, 54), wherein elastic sections, which form the elastic elements (56, 58), adjoin the rigid sections (64, 66) of the two clamping bodies.

2. Differential pressure sensor as claimed in Claim 1, wherein the elastic elements comprise spring arms, wherein the axial clamping force acting on the counter-bodies is applied by an elastic bending deflection of the spring arms from their resting position.

3. Differential pressure sensor as claimed in Claim 1 or 2,
   wherein the counter-bodies (20, 30) each have a chamber body in which recesses for the pressure chambers (22, 32) are formed, and each have a reinforcement body, wherein the reinforcement bodies are arranged in each case between the chamber bodies and the clamping surfaces.

4. Differential pressure sensor as claimed in Claim 3, wherein the reinforcement bodies have a material whose thermal expansion coefficient does not deviate by more than 5 ppm/K, preferably by not more than 2 ppm/K, from the thermal expansion coefficient of the material of the chamber bodies.

5. Differential pressure sensor as claimed in one of the previous claims,
   wherein the differential pressure sensor is specified for a static overload pressure $p_L$, and wherein the process isolating diaphragm (10) has a surface A to which a pressure ($p_1$, $p_2$) can be applied, wherein a clamping force F with which the clamping device (50) clamps the differential pressure measuring cell can be described with the following formula:

$$F = S \cdot p_L \cdot A$$

wherein the safety factor S is not less than 0.2, preferably not less than 0.5 and particularly preferably not less than 0.8.

6. Differential pressure sensor as claimed in Claim 5, wherein the clamping force F meets the aforementioned conditions, i.e. that the clamping force F, with which the clamping device (50) clamps the differential pressure measuring cell, can be described with the following formula:

$$F = S \cdot p_L \cdot A$$

wherein the safety factor S is not less than 0.2, preferably not less than 0.5 and particularly preferably not less than 0.8 over a temperature range of between 0 °C and 100 °C , particularly between -20 °C and 150 °C and preferably between -40 °C and 180 °C.

7. Differential pressure sensor as claimed in one of the previous claims,
wherein the clamping force varies over a temperature range of between 0 °C and 100 °C, particularly between -20 °C and 150 °C and preferably between -40 °C and 180 °C at a constant pressure which is smaller than the overload pressure PL by not more than half the maximum, preferably not more than 2/5 of the maximum, particularly preferably not more than 1/3 of the maximum of a clamping force in the temperature range.

8. Differential pressure sensor as claimed in one of the previous claims,
wherein the clamping bodies have a material whose thermal expansion coefficient does not deviate by more than 5 ppm/K, particularly by not more than 2 ppm/K and preferably by not more than 1 ppm/K from the thermal expansion coefficient of the material of the reinforcement bodies.

9. Differential pressure sensor as claimed in one of the previous claims,
wherein a maximum tension that occurs at the clamping device (50) is less than o02 of the material of the clamping device in the range of this maximum tension.

10. Differential pressure sensor as claimed in one of the previous claims,
wherein the clamping device features a metal material, preferably Kovar or steel.

11. Differential pressure sensor as claimed in one of the previous claims,
wherein the reinforcement bodies feature monocrystalline or polycrystalline silicon or a ceramic material, preferably AlN, SiC, SiN or cordierite.

**Revendications**

1. Capteur de pression différentielle (1), comprenant une cellule de mesure de pression différentielle (2) avec une membrane de mesure (10), un premier contre-corps (20), un deuxième contre-corps (30) et un convertisseur,
et un dispositif de serrage élastique (50) ;
capteur pour lequel la membrane de mesure (10) est disposée entre le premier contre-corps (20) et le deuxième contre-corps (3) et est relié de façon étanche à la pression avec les deux contre-corps, une premier chambre de pression (22) étant formée entre la membrane de mesure (10) et le premier contre-corps (20) et une deuxième chambre de pression (32) étant formée entre la membrane de mesure (10) et le deuxième contre-corps (30), le premier contre-corps (20) et le deuxième contre-corps (30) présentant chacun un canal de pression (24, 34), à travers lequel la chambre de pression (22, 32) respective peut être soumise respectivement à une première et une deuxième pression (p1, p2),
capteur pour lequel le convertisseur (40) est prévu pour la conversion en un signal électrique d'une déformation de la membrane de mesure dépendant d'une différence entre la première pression (p1) et la deuxième pression (p2) ;
capteur pour lequel le dispositif de serrage (50) présente une première surface de serrage (52), laquelle agit sur une première face arrière (26) - située à l'opposé de la membrane de mesure (10) - du premier contre-corps (20), et une deuxième surface de serrage (54), laquelle agit sur une deuxième face arrière (36) - située à l'opposé de la membrane de mesure (10) - du deuxième contre-corps (30), le dispositif de serrage (50) comportant des éléments élastiques (56, 58), par l'intermédiaire desquels les surfaces de serrage (52, 54) sont couplées mécaniquement, afin de serrer les cellules de mesure de pression différentielle (2) avec une force de serrage axiale, la première et la deuxième surface de serrage (52, 54) étant de forme rigide, le dispositif de serrage (50) présentant une pince avec un premier corps de serrage (60), lequel présente la première surface de serrage (52), et un deuxième corps de serrage (62), lequel présente la deuxième force de serrage (54), le premier et le deuxième corps de serrage présentant chacun un élément élastique (56, 58),
capteur pour lequel le premier et le deuxième corps de serrage sont reliés entre eux sous tension, afin d'exercer une force de serrage sur la cellule de mesure de pression différentielle, les deux corps de serrage (60, 62) présentant une section centrale de forme rigide (64, 66), qui comprend les surfaces de serrage (52, 54), des sections élastiques - qui forment les deux éléments élastiques (56, 58) - jouxtant les sections de forme rigide (64, 66) des deux corps de serrage.

2. Capteur de pression différentielle selon la revendication 1, pour lequel les éléments élastiques comprennent des branches de ressort, la force de serrage axiale agissant sur les contre-corps étant appliquée par une flexion élastique des branches de ressort à partir de leur position de repos.

3. Capteur de pression différentielle selon la revendication 1 ou 2,
   pour lequel les contre-corps (20, 30) présentent chacun un corps de chambre dans lequel sont formés des évidements pour les chambres de pression (22, 32), et présentent chacun un corps de renforcement, les corps de renforcement étant disposés respectivement entre les corps de chambre et les surfaces de serrage.

4. Capteur de pression différentielle selon la revendication 3,
   pour lequel les corps de renforcement présentent un matériau, dont le coefficient de dilatation thermique ne diffère pas de plus de 5 ppm/K, de préférence pas plus de 2 ppm/K du coefficient de dilatation thermique du matériau des corps de chambre.

5. Capteur de pression différentielle selon l'une des revendications précédentes, pour lequel le capteur de pression différentielle est spécifié pour une pression de surcharge statique $p_L$ et pour lequel la membrane de mesure (10) présente une surface A pouvant être soumise à une pression ($p_1$, $p_2$), une force de serrage F, avec laquelle le dispositif de serrage (50) serre la cellule de mesure de pression différentielle, pouvant être décrite avec la formule suivante :

$$F = S \cdot p_L \cdot A$$

où le facteur de sécurité S n'est pas inférieur à 0,2, de préférence pas inférieur à 0,5 et particulièrement de préférence pas inférieur à 0,8.

6. Capteur de pression différentielle selon la revendication 5,
   pour lequel la force de serrage F remplit les conditions mentionnées, à savoir que la force de serrage F, avec laquelle le dispositif de serrage (50) serre la cellule de mesure de pression différentielle, peut être décrite avec la formule suivante :

$$F = S \cdot p_L \cdot A$$

où le facteur de sécurité S n'est pas inférieur à 0,2, de préférence pas inférieur à 0,5 et particulièrement de préférence pas inférieur à 0,8, sur une gamme de température comprise entre 0 °C et 100 °C , notamment entre -20 °C et 150 °C et de préférence entre -40 °C et 180 °C.

7. Capteur de pression différentielle selon l'une des revendications précédentes, pour lequel la force de serrage varie sur une gamme de température comprise entre 0 °C et 100 °C, notamment entre -20 °C et 150 °C et de préférence entre - 40 °C et 180 °C à une pression constante qui est inférieure à la pression de surcharge PL de la moitié au maximum, de préférence de 2/5 au maximum, particulièrement de préférence de 1/3 au maximum d'une force de serrage maximale dans la gamme de température.

8. Capteur de pression différentielle selon l'une des revendications précédentes, pour lequel les corps de serrage présentent un matériau, dont le coefficient de dilatation thermique ne diffère pas de plus de 5 ppm/K, notamment pas plus de 2 ppm/K et de préférence pas plus de 1 ppm/K du coefficient de dilatation thermique du matériau des corps de renforcement.

9. Capteur de pression différentielle selon l'une des revendications précédentes, pour lequel un serrage maximal, qui apparaît sur le dispositif de serrage (50), est inférieur à la valeur de contrainte de normalisation o02 du matériau du dispositif de serrage dans la plage de ce serrage maximal.

10. Capteur de pression différentielle selon l'une des revendications précédentes, pour lequel le dispositif de serrage présente un matériau métallique, notamment du Kovar ou de l'acier.

11. Capteur de pression différentielle selon l'une des revendications précédentes, pour lequel les corps de renforcement présentent du silicium monocristallin ou polycristallin ou un matériau en céramique, notamment AIN, SiC, SiN ou Cordierit.

Fig. 1

Fig. 1

**Fig. 2**

**Fig. 3a**

**Fig. 3b**

**Fig. 4**

**Fig. 5a**

**Fig. 5b**

**Fig. 5c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1299701 B1
- DE 102006040325 A1
- DE 102006057828 A1
- US 4458537 A
- DE 102009046229 A1
- US 7360431 B2
- DE 102010028773 A1
- US 5134887 A
- DE 3751546 T2
- DE 102012109587

**In der Beschreibung aufgeführte Nicht-Patentliteratur**

- **HEIN et al.** *Transducers,* 1997, vol. 97, 1477-1480